# EUROPEAN PATENT SPECIFICATION

(11) **EP 3 796 039 B1**
(45) Date of publication and mention of the grant of the patent: **14.10.2026**
(21) Application number: 20197281.7
(22) Date of filing: 21.09.2020
(51) Int. Cl.: G01S 13/75, G05D 1/00, G01S 13/84

(54) **MOBILE DEVICE SELF-LOCATION METHOD USING AT LEAST ONE PASSIVE RADIO-FREQUENCY DEVICE**
VERFAHREN ZUR SELBSTLOKALISIERUNG EINES MOBILEN GERÄTES UNTER VERWENDUNG MINDESTENS EINER PASSIVEN FUNKFREQUENZ-VORRICHTUNG
PROCÉDÉ D'AUTO-LOCALISATION D'UN APPAREIL MOBILE UTILISANT AU MOINS UN DISPOSITIF PASSIF À RADIOFRÉQUENCE

(30) Priority: 23.09.2019 IT 201900016988
(43) Date of publication of application: 24.03.2021
(73) Proprietor: Università di Pisa, 56124 Pisa (IT)
(72) Inventor: BUFFI, Alice, I-56122 Pisa (IT); NEPA, Paolo, I-56132 Pisa (IT); MOTRONI, Andrea, I-55023 Morgo a Mozzano (Lucca) (IT); TELLINI, Bernardo, I-56125 Pisa (IT)
(74) Representative: Lunati & Mazzoni S.r.L.

(56) References cited:
- EMIDIO DIGIAMPAOLO ET AL: "Mobile Robot Localization Using the Phase of Passive UHF RFID Signals", IEEE TRANSACTIONS ON INDUSTRIAL ELECTRONICS., vol. 61, no. 1, 1 January 2014 (2014-01-01), USA, pages 365 - 376, XP055604532, ISSN: 0278-0046, DOI: 10.1109/TIE.2013.2248333
- MAGNAGO V ET AL: "Robot Localisation based on Phase Measures of backscattered UHF-RFID Signals", 2019 IEEE INTERNATIONAL INSTRUMENTATION AND MEASUREMENT TECHNOLOGY CONFERENCE (I2MTC), IEEE, 20 May 2019 (2019-05-20), pages 1 - 6, XP033613486, DOI: 10.1109/I2MTC.2019.8826864
- MARTINELLI FRANCESCO: "A Robot Localization System Combining RSSI and Phase Shift in UHF-RFID Signals", IEEE TRANSACTIONS ON CONTROL SYSTEMS TECHNOLOGY, IEEE SERVICE CENTER, NEW YORK, NY, US, vol. 23, no. 5, 1 September 2015 (2015-09-01), pages 1782 - 1796, XP011666128, ISSN: 1063-6536, [retrieved on 20150811], DOI: 10.1109/TCST.2014.2386777

## Description

This invention relates to a mobile device self-location method using passive radio frequency devices of the type specified in the preamble of the first claim.

In particular, this invention relates to a reliable self-location method, which makes it possible to track a moving object and, thus, very precisely determine the position of the mobile device at least in relation to the passive device.

A similar method is described in the article *"*Mobile Robot Localization Using the Phase of Passive UHF RFID Signals", EMIDIO DIGIAMPAOLO ET AL, IEEE TRANSACTIONS ON INDUSTRIAL ELECTRON / CS., vol. 61, no. 1, 1 January 2014 (2014-01-01*).*

As is well known, there are numerous location systems known in the current state of the art and these can have different characteristics, starting with the type of connection through which position data are exchanged between mobile devices and position detectors.

For example, satellite tracking systems, such as GPS, GLONASS, and GALILEO systems, are well known in the automotive sector and make it possible to achieve tracking errors of around a few meters.

On the other hand, in indoor environments, different methodologies are known. The simplest solutions, for example those adopted for wheeled vehicles, involve the use of odometers. However, the measurements made by the encoders on the wheels accumulate an error that can lead to a drift in estimating the position of the vehicle itself.

For this reason, these sensors are typically used in conjunction with others, such as sonar or laser sensors. Sonar sensors are economical, but do not provide good accuracy. In contrast, lasers allow you to measure the distance of obstacles with errors of a few centimetres, though they cost more, and also allow you to create two-dimensional or three-dimensional maps of the scenario. In addition, their performance significantly degrades in dynamic scenarios in which people and objects move around. Alternatively, optical sensors, e.g. cameras, can be used. These use sophisticated image processing methods with high computational costs and, in addition, offer performance that is highly dependent both on the scenario and lighting conditions, as well as having privacy issues.

In order to overcome the drawbacks of the above-mentioned technique, RFID-based radiolocation systems can be provided.

Such systems enable low-cost location systems to be provided without the need for special optical visibility. To locate a mobile device with RFID technology, it is possible to equip it with one or more RFID antennas, placing reference tags, also called passive beacons, in known positions in the surrounding environment. Widely used solutions implement algorithms, such as Kalman filters, particle filters, or their variants, using data acquired by the RFID system in conjunction with other kinematic sensors in order to determine the position of the mobile device in real time. Although it performs well considering its low cost, the well known technique mentioned above also comprises some significant drawbacks.

Typically, the RFID location systems mentioned use a large number of reference tags and have lengthy calibration procedures to determine some unknown parameters of the tag response signal, without which the position of the mobile device cannot be determined. However, the results of this calibration are very dependent on the scenario being considered and must be repeated if the scenario changes.

This drawback is due to the fact that, typically, the location systems mentioned above involve activating RFID tags only when the mobile device passes near them, enabling a timely mapping, in the moment the mobile device passes by the tag, but a rough one as far as regards the rest of the route.

In addition, performance is very dependent on the type of tag used and the density with which the tags are placed in the environment. Some solutions involve using specially designed tags with a particular radiation emission pattern.

In this context, the technical task underlying this invention is to devise a mobile device self-location method using passive radio frequency devices that is capable of basically overcoming at least some of the above-mentioned drawbacks.

In this context of said technical task, it is an important purpose of the invention to achieve a mobile device self-location method using passive radio frequency devices that makes it possible to determine, with high precision, the path taken by the mobile device at least in relation to the passive device and in each moment of time. Another important purpose of the invention is to provide a self-location method that can be easily implemented in mobile devices that are not prohibitively complex nor expensive.

Another purpose is to provide a self-location method through which to verify the reliability of the location data received by the mobile device.

In conclusion, an important purpose of the invention is to have a self-location method that is easily scalable and adaptable to different operating scenarios thanks to the possibility of installing passive devices in any position within the scenario.

The technical task and specified purposes are achieved with a mobile device self-location method using passive radio frequency devices as claimed in the appended claim 1.

Preferred technical solutions are set forth in the dependent claims.

The features and advantages of the invention will be apparent from the detailed description of preferred embodiments of the disclosure, with reference to the accompanying drawings, in which:

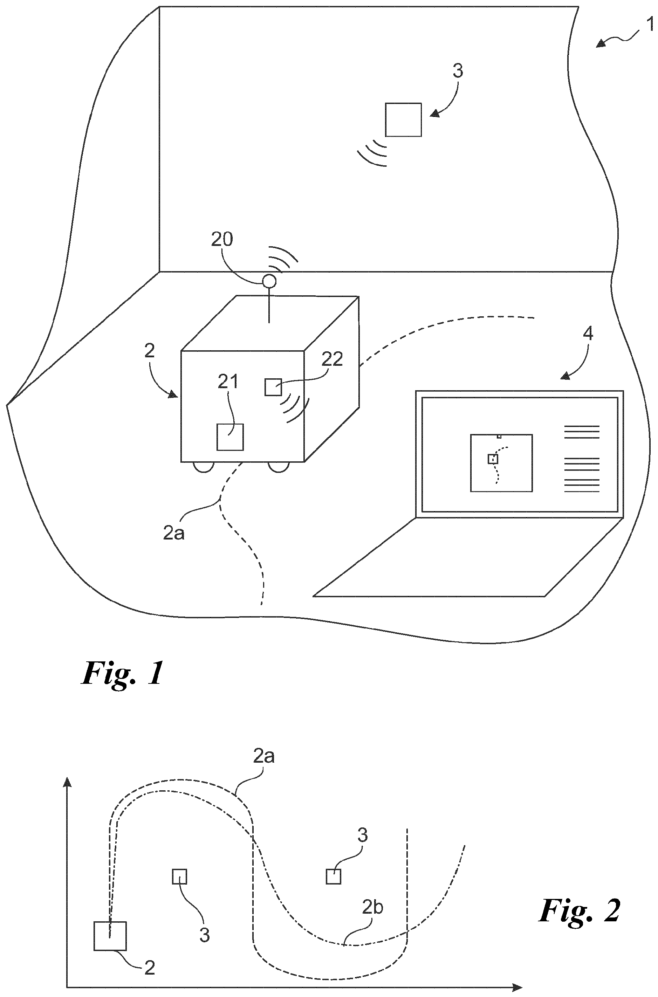

Fig. 1 shows a simplified diagram of a system configured to provide a mobile device self-location method using passive radio frequency devices according to the disclosure; and
Fig. 2 shows an example graph showing the real and hypothetical trajectories deduced by means of a mobile device self-location method using passive radio frequency devices according to the disclosure.

In this document, the measures, values, shapes and geometric references (such as perpendicularity and parallelism), when used with words like "about" or other similar terms such as "approximately" or "substantially", are to be understood as except for measurement errors or inaccuracies due to production and/or manufacturing errors and, above all, except for a slight divergence from the value, measure, shape or geometric reference with which it is associated. For example, if associated with a value, such terms preferably indicate a divergence of no more than 10% from the value itself.

Furthermore, when terms such as "first", "second", "upper", "lower", "main" and "secondary" are used, they do not necessarily identify an order, relationship priority or relative position, but they can simply be used to distinguish different components more clearly from one another.

Unless otherwise specified, as is apparent from the following discussion, terms such as "processing", "computer science", "determination", "calculation" or similar are considered to refer to the computer action and/or processes or similar electronic computing devices that manipulate and/or transform data represented as physical, such as electronic quantities of registers of an information system and/or memory, other data similarly represented as physical quantities within computer systems, registers or other devices for storing, transmitting or displaying information. Unless otherwise stated, the measurements and data reported in this text shall be considered as performed in International Standard Atmosphere ICAO (ISO 2533:1975).

With reference to the figures, the system in which the mobile device self-location method using passive radio frequency devices is implemented, according to the disclosure, is globally indicated with the number **1.**

The system 1 is a location system comprising at least one mobile device **2,** one passive device **3,** and at least one processor **4.**

They system 1 is preferably configured to provide the mobile device self-location method using passive radio frequency devices.

The mobile device 2 is any device that can be moved along at least one trajectory **2a.** The trajectory 2a can be any kind: straight, curved, or something else.

The mobile device 2 can move along any surface and in any environment. It may comprise and, specifically, be a drone, a forklift, or any other vehicle designed to move within the inside or outside environment. In addition, it may comprise and, specifically, be a robot, including a small one and one designed to move on a surface such as a floor or table.

The mobile device 2, preferably, comprises at least one antenna **20.**

The antenna 20 is preferably configured to emit radio frequency source signals. Antennae of this kind are known in the current state of the art.

In particular, in addition, the antenna 20 is preferably designed to emit UHF or microwave radio source signals

In addition, or alternatively, the antenna 20 is preferably configured to receive radio frequency source signals.

The mobile device 2 may comprise a control board for operating the mobile device itself.

The passive device 3 is preferably configured to respond to the source signals with feedback signals. In particular, the passive device 3 is substantially a device capable of both receiving and emitting radio signals conveniently reflecting the source signal. In particular, the device 3 preferably manipulates, when hit by source signals, the source signals so as to remodulate them in feedback signals.

Therefore, the passive device 3 is preferably configured to forward to the mobile device 2 the feedback signals determined by the response of the passive device 3 to the source signals.

The passive devices 3 of this kind may include various types of receiving/emitting devices. Specifically, the passive devices 3 are preferably RFID tags.

The system 1 could also comprise not just one passive device 3, but several passive devices 3 in order to ensure the operation thereof in situations of arbitrary sizes.

In this case, the passive devices 3 could preferably be configured to receive the same shared source signal beginning with the antenna 20. The antenna 20, in turn, could receive feedback signals, from each of the passive devices 3, in response to the shared source signal.

The processor 4 is preferably designed to compare the source signals with the feedback signals in order to determine at least the phase of said feedback signals. To this end, the processor can be any electronic means capable of processing the data received from the mobile device 2, including any passive devices 3, so as to extract coherent information. In particular, the processor enables the user to determine the location of the mobile device 2 in the environment through which it is moving.

The processor 4 could, in addition, be external or internal to the mobile device 2.

In this sense, the mobile device 2 could include the processor 4.

Alternatively, the processor 4 could be external to the mobile device 2 and the mobile device 2 could comprise connecting means **22.**

The connecting means 22, if included, are preferably configured to transmit at least the feedback signals to the processor 4. In fact, the processor 4 could be designed to control the antenna 20 and, therefore, could determine the source signals and receive only the feedback signals in order to compare these. Otherwise, the processor 4 could receive both the signals.

The connecting means 22 can be connectors via cable, for example USB or ethernet cables, or wireless connectors, for example, Wi-Fi, Bluetooth, or the like.

The processor 4 could be a PC, a tablet, a smartphone, or any other electronic processor preferably also designed to display the results of the comparison between the signals.

Alternatively, or in addition, the system 1 can comprise, for each mobile device 2, a processor 4, connected and, specifically, attached to the same mobile device 4.

If the system 1 were to comprise a multitude of passive devices 3, the processor 4 would be designed to process each of the feedback signals, coming from each passive device 3, with the common signals.

The processor 4 can comprise information relating to the spatial position of the passive devices 3. It therefore comprises a positions database associating the spatial position (specifically, the only spatial position), i.e. conveniently in the environment in which the mobile device 2 is moving, to each passive device 3. The processor 4 may comprise a trends database associating the variations (acquired and/or determined as described herein) to each device.

The system 1 is preferably designed to process and analyse data for determining the position of the mobile device 2 in the environment, including thanks to elements other than the passive devices.

In fact, the mobile device 2 preferably comprises, in addition, at least one sensor **21** as well.

The sensor 21 is preferably operationally connected to the processor 4.

In addition, it is configured to acquire one or more status variables relating to the mobile device 2 moving along the trajectory 2a.

The status variables can, therefore, include one or more kinematic quantities such as the acceleration or the angular speed of the mobile device 2. The sensor 21 can, therefore, be a kinematic sensor, for example an inertial one. Alternatively, or in addition, the sensor 21 can be an encoder for controlling/measuring the movement motors of the mobile device itself.

The status variables can be used to determine the position of the mobile device 2 and, specifically, are useful for reconstructing hypothetical trajectories **2b.** The hypothetical trajectories 2b are trajectories or paths detected by the sensor 21 while the mobile device 2 moves along the trajectory 2a constructed from the status variables, introducing a possible variation on some parameters.

The processor 4 is preferably designed to construct, at predetermined intervals of time, a multitude of hypothetical trajectories 2b deduced by means of said one or more status variables by associating a weight to each of the hypothetical trajectories 2b, conveniently comparing a series of trends (conveniently stored in said trends database) in phase variation, constructed based on the hypothetical trajectories 2b, with the phase variation trend determined based on detections of the antenna 20. Said weight is preferably deterministic, i.e. it does not use probability distributions constructed beforehand, but is given by the comparison between the data of the measured trajectory and those of the hypothetical trajectory.

Specifically, said series of trends in phase variation is preferably constructed only on the knowledge of the position of the passive devices, without other information regarding the type and their radiation emission characteristics.

It should be noted how, preferably, the processor 4 and therefore the system 1 may comprise at least one first processor 4 and at least one second processor 4. Specifically, it can comprise, for each mobile device 2: a first processor 4 associated and, specifically, attached to the same mobile device 2; and at least one second processor 4, preferably just one, not attached to a mobile device 2 and/or a passive device 3.

The first processor 4 and the second processor 4 are in data connection.

The first processor 4 can be designed to determine the phase as a function of the source signal and of the feedback signal.

The first processor 4 can be designed to control the antenna 20 and, therefore, could receive only the feedback signals.

The second processor 4 could, in addition, be external or internal to the mobile device 2.

The second processor 4 is designed to receive from the at least one mobile device 2 the phase of said feedback signals and, conveniently, one or more status variables relating to the mobile device 2. In particular, the second processor 4 can be placed in data connection with the mobile device 2 by means of connecting means 22 or, preferably, with the first processor 4 in turn in data connection with the mobile device 2 by means of the connecting means 22.

The second processor 4 can be designed to determine the position of the mobile device 2 as a function of the phase variation determined by the first processor 4 and, preferably, of the status variables. Conveniently, it can be designed to construct, specifically at predetermined intervals of time, a multitude of hypothetical trajectories 2b deduced by means of one or more status variables by associating a weight to each of the hypothetical trajectories 2b and comparing a series of trends (conveniently stored in said trends database) in phase variation constructed based on the hypothetical trajectories 2b with the phase variation trend determined based on detections of the antenna 20.

The second processor 4 may comprise said positions database and/or said trends database.

The operation of the system 1 described above in structural terms is substantially defined by the method as described below.

The invention comprises, in fact, a new mobile device self-location method using at least one passive radio frequency device 3.

The method is, preferably, implemented in the system 1.

The method comprises, preferably, at least the movement of the mobile device 2 along any trajectory 2a, the emission of source signals, the reception of the feedback signals, and the comparison of the feedback signals and the source signals in order to determine the phase of said feedback signals.

The emission of the source signals is preferably carried out by means of the antenna 20. In addition, the emission can be controlled by the processor 4 and the processor 4 could also be configured to determine the emission frequency of the source signals.

Advantageously, the emission of the source signals occurs simultaneously to the movement at predetermined intervals of time. This means that the antenna 20 preferably does not emit signals only in proximity to the passive devices 3, but continues to emit source signals, at intervals of time that are regular and close together, along the whole trajectory 2a.

The reception of the feedback signals can occur according to different methods. The antenna 20 preferably emits and receives both the source signals and the feedback signals and transmits them, enabling them to reach the processor 4 and, specifically, conveniently through the first processor 4, the second processor 4. Alternatively, the processor 4 and, specifically, the second processor 4 could directly receive the feedback signals.

The comparison of the trend in the phase variation of said feedback signals with a series of hypothetical trends (conveniently stored in said trends database) in phase variation constructed based on said hypothetical trajectories 2b thus enables the position of the mobile device 2 to be determined, at least in relation to the passive device 3 during the predetermined intervals of time.

As already mentioned, the system 1 can also include a sensor 21.

The method can therefore comprise determining said hypothetical trajectories by employing one or more status variables so as to numerically determine said series of hypothetical trends in phase variation.

The processor 4 therefore constructs, at predetermined intervals of time, a multitude of hypothetical trajectories 2b deduced by means of one or more status variables and associates a weight to each one of the hypothetical trajectories 2b by comparing said hypothetical trend in phase variation associated to the hypothetical trajectory 2b with the phase variation associated with the trajectory 2a. The weight is, in particular, preferably determined by assessing the actual closeness or resemblance between the hypothetical trend in phase variation and the trend in phase variation determined based on detections of the antenna 20 according to a deterministic procedure.

The mobile device self-location method using passive radio frequency devices according to the invention entails significant advantages.

In fact, the method makes it possible to assess, with great precision, the position of the mobile device 2 at least in relation to the passive device. In particular, the clearest advantage is due to the fact that the trajectory 2a is reconstructed by means of the trend in phase variation of the measured source signals and feedback signals that follow the movement of the mobile device 2.

The method can, therefore, be implemented in a system 1 that is greatly simplified and cost-effective, without environmental limits, and does not require particular preventative calibrations.

This aspect is enhanced by the fact that the system 1 and, therefore, the method can self-locate a mobile device by just reading one tag, i.e. only one passive device 3, along a certain portion of the trajectory. This aspect makes it possible, in addition, to apply the method and/or use the system 1 for arbitrary trajectories as well because, since just one passive device 3 is enough, there are no constraints as to form or the position of the trajectory.

It should be noted how the above-mentioned advantages are at least in part determined by the fact that the system 1 and, therefore, the method require knowledge of just the one spatial position of the one or more passive devices 3.

In summary, the method can be implemented in a system 1 that is extremely simplified and cost-effective, without environmental limits, and does not require particular preventative calibrations in order to know, for example, the phase offset term of the passive device, the reading range of the passive device installed in the scenario, the covariance matrix of the phase error of the response signal of the passive device. In particular, this system can be part of the system that implements the autonomous navigation of the mobile device.

The system 1 makes it possible to assess the trajectory in a deterministic manner, thanks to the assessment of the phase variation, unlike what is described in *"*Mobile Robot Localization Using the Phase of Passive UHF RFID Signals", EMIDIO DIGIAMPAOLO ET AL, IEEE TRANSACTIONS ON INDUSTRIAL ELECTRON / CS., vol. 61, no. 1, 1 January 2014 (2014-01-01*)* Because of this, the assessment of the trajectory is based, instead, on at least two tags with a predetermined emission radius and in which the signal phase is assessed, and not the phase variation, with the consequence that a first calibration phase is necessary in which a probability distribution is, in any case, detected, which makes the method in the above-mentioned patent probabilistic and not deterministic.

The invention is susceptible to variations falling within the scope of the inventive concept defined by the claims.

In this context, all details can be replaced by equivalent elements, and the materials, shapes, and dimensions may be any materials, shapes, and dimensions.

## Claims

1. A mobile device self-location method using at least one passive radio-frequency device (3), implemented in a system (1) including said mobile device (2), said passive device (3), and a processor (4),
- said mobile device (2) including at least
- one antenna (20) configured to emit radio-frequency source signals, and
- at least one sensor (21) operatively connected to said processor (4) and configured to acquire one or more state variables related to said mobile device (2) moving along a trajectory (2a);
- said passive device (3) being configured to replicate, with feedback signals, to said source signals and to forward to said mobile device (2) said feedback signals determined by the response of said passive device (3) to said source signals,
- said processor (4) being designed to at least compare said source signals and said feedback signals,
and said method comprising:
- moving said mobile device (2) along said trajectory (2a),
- emitting said source signals simultaneously to said movement of said mobile device at predetermined intervals of time along the said trajectory (2a),
- receiving said feedback signals along the said trajectory (2a),
- comparing said feedback signals and said source signals involving at least the determination of the phase variation, measured by said predetermined intervals of time along the said trajectory (2a), between said source signals and said feedback signals, in such a way as to determine, in said predetermined intervals of time, a determined trend of phase variation based on antenna (20) detections associated with said trajectory (2a);
- constructing, at predetermined intervals of time, a multitude of hypothetical trajectories (2b) deduced by means of said one or more state variables and a multitude of said hypothetical trends in phase variation based on said hypothetical trajectories (2b);
- storing in a trends database said determined trend in phase variation and said hypothetical trends in phase variation,
and being **characterised by** further comprising
- comparing the said determined trend in the phase variation of said feedback signals with the series of said hypothetical trends in phase variation constructed based on said series of hypothetical trajectories (2b) enabling the position of the mobile device (2) to be determined, at least in relation to the passive device (3) during the predetermined intervals of time, by mixing the results of said comparison with one or more said state variables so as to numerically determine said trajectory (2a);
- wherein said processor (4) associates a deterministic weight to each of said hypothetical trajectories (2b) comparing said series of said hypothetical trends in phase variation stored in said trends database in phase variation, constructed on the basis of said series of hypothetical trajectories (2b), with the trend of phase variation determined on the basis of said antenna (20) detections;
- wherein said series of said hypothetical trends in phase variation is constructed only on the knowledge of the position of said passive device (3), without other information regarding the type and their radiation emission characteristics;
- wherein said weight is determined by assessing the actual closeness or resemblance between the hypothetical trend in phase variation and the trend in phase variation determined based on the detections of the antenna (20) according to a deterministic procedure; and
- wherein said state variables include one or more kinematic quantities such as the acceleration or the angular velocity of said mobile device (2).

2. The method according to the previous claim, wherein said passive devices (3) are RFID tags.

3. The method according to at least one previous claim, wherein said source signals are UHF radio signals or microwaves.

4. The method according to at least one previous claim, comprising a plurality of said passive devices (3) and wherein said source signals are common to said passive devices (3), and said antenna (20) receives feedback signals from each of said passive devices (3), and said processor (4) compares each of said feedback signals with said common source signals.

5. The method according to at least one previous claim, wherein said mobile device (2) comprises said processor (4).

6. The method according to at least one of the previous claims 1-4, wherein said processor (4) is external to said mobile device (2), and said mobile device (2) comprises connecting means (22) configured to transmit at least said feedback signals to said processor (4).

7. A system (1) comprising at least one mobile device (2), one passive device (3), and one processor (4) configured to implement a method according to at least one previous claim.

## Patentansprüche

1. Verfahren zur Selbstlokalisierung einer mobilen Vorrichtung unter Verwendung mindestens einer passiven Hochfrequenzvorrichtung (3), implementiert in einem System (1), das die genannte mobile Vorrichtung (2), die genannte passive Vorrichtung (3) und einen Prozessor (4) umfasst,
- wobei die genannte mobile Vorrichtung (2) mindestens
- eine Antenne (20) umfasst, die darauf konfiguriert ist, Hochfrequenz-Quellsignale auszusenden, und
- mindestens einen Sensor (21), der mit dem genannten Prozessor (4) operativ verbunden und darauf konfiguriert ist, eine oder mehrere Zustandsvariablen zu erfassen, die sich auf die genannte mobile Vorrichtung (2) beziehen, welche sich entlang einer Trajektorie (2a) bewegt;
- wobei die genannte passive Vorrichtung (3) darauf konfiguriert ist, die genannten Quellsignale mittels Rückmeldesignalen zu replizieren und die durch die Reaktion der genannten passiven Vorrichtung (3) auf die genannten Quellsignale bestimmten Rückmeldesignale an die genannte mobile Vorrichtung (2) weiterzuleiten;
- wobei der genannte Prozessor (4) dazu ausgelegt ist, zumindest die genannten Quellsignale und die genannten Rückmeldesignale zu vergleichen,
**und wobei das genannte Verfahren umfasst:**
- Bewegen der genannten mobilen Vorrichtung (2) entlang der genannten Trajektorie (2a),
- Aussenden der genannten Quellsignale gleichzeitig mit der Bewegung der genannten mobilen Vorrichtung in vorbestimmten Zeitintervallen entlang der genannten Trajektorie (2a),
- Empfangen der genannten Rückmeldesignale entlang der genannten Trajektorie (2a),
- Vergleichen der genannten Rückmeldesignale und der genannten Quellsignale, wobei dies zumindest die Bestimmung der Phasenänderung umfasst, die in den genannten vorbestimmten Zeitintervallen entlang der genannten Trajektorie (2a) zwischen den genannten Quellsignalen und den genannten Rückmeldesignalen gemessen wird, um in den genannten vorbestimmten Zeitintervallen einen bestimmten Verlauf der Phasenänderung auf der Grundlage der Erfassungen der Antenne (20)
zu bestimmen, die der genannten Trajektorie (2a) zugeordnet sind;
- Erzeugen, in vorbestimmten Zeitintervallen, einer Vielzahl hypothetischer Trajektorien (2b), die mittels der genannten einen oder mehreren Zustandsvariablen abgeleitet werden und
einer Vielzahl der genannten hypothetischen Verläufe der Phasenänderung auf der Grundlage der genannten hypothetischen Trajektorien (2b);
- Speichern des genannten bestimmten Verlaufs der Phasenänderung und der genannten hypothetischen Verläufe der Phasenänderung in einer Verlaufsdatenbank,
**dadurch gekennzeichnet, dass** das Verfahren ferner umfasst:
- Vergleichen des genannten bestimmten Verlaufs der Phasenänderung der genannten Rückmeldesignale mit der Reihe der genannten hypothetischen Verläufe der Phasenänderung, die auf der Grundlage der genannten Reihe hypothetischer Trajektorien (2b) erzeugt wurden, wodurch die Position der mobilen Vorrichtung (2), zumindest in Bezug auf die passive Vorrichtung (3), während der genannten vorbestimmten Zeitintervalle bestimmt werden kann, indem die Ergebnisse des genannten Vergleichs mit einer oder mehreren der genannten Zustandsvariablen kombiniert werden, um die genannte Trajektorie (2a) numerisch zu bestimmen;
- wobei der genannte Prozessor (4) jeder der genannten hypothetischen Trajektorien (2b) ein deterministisches Gewicht zuordnet, indem er die genannte Reihe der genannten hypothetischen Verläufe der Phasenänderung, die in der genannten Datenbank für Phasenänderungsverläufe gespeichert und auf der Grundlage der genannten Reihe hypothetischer Trajektorien (2b) erzeugt wurden, mit dem auf der Grundlage der Erfassungen der genannten Antenne (20) bestimmten Verlauf der Phasenänderung vergleicht;
- wobei die genannte Reihe der genannten hypothetischen Verläufe der Phasenänderung ausschließlich auf der Kenntnis der Position der genannten passiven Vorrichtung (3) beruht, ohne weitere Informationen über den Typ und deren Strahlungsemissionseigenschaften;
- wobei das genannte Gewicht durch Bewertung der tatsächlichen Nähe oder Ähnlichkeit zwischen dem hypothetischen Verlauf der Phasenänderung und dem auf der Grundlage der Erfassungen der Antenne (20) bestimmten Verlauf der Phasenänderung gemäß einem deterministischen Verfahren bestimmt wird; und
- wobei die genannten Zustandsvariablen eine oder mehrere kinematische Größen wie die Beschleunigung oder die Winkelgeschwindigkeit der genannten mobilen Vorrichtung (2) umfassen.

2. Verfahren gemäß dem vorhergehenden Anspruch, wobei die genannten passiven Vorrichtungen (3) RFID-Tags sind.

3. Verfahren gemäß mindestens einem der vorhergehenden Ansprüche, wobei die genannten Quellsignale UHF-Funksignale oder Mikrowellen sind.

4. Verfahren gemäß mindestens einem der vorhergehenden Ansprüche, umfassend eine Mehrzahl der genannten passiven Vorrichtungen (3), wobei die genannten Quellsignale den genannten passiven Vorrichtungen (3) gemeinsam sind, und wobei die genannte Antenne (20) Rückmeldesignale von jeder der genannten passiven Vorrichtungen (3) empfängt und der genannte Prozessor (4) jedes der genannten Rückmeldesignale mit den genannten gemeinsamen Quellsignalen vergleicht.

5. Verfahren nach mindestens einem der vorhergehenden Ansprüche, wobei die genannte mobile Vorrichtung (2) den genannten Prozessor (4) umfasst.

6. Verfahren nach mindestens einem der vorhergehenden Ansprüche 1 bis 4,
wobei der genannte Prozessor (4) außerhalb der genannten mobilen Vorrichtung (2) angeordnet ist und die genannte mobile Vorrichtung (2) Verbindungsmittel (22) umfasst, die darauf konfiguriert sind, zumindest die genannten Rückmeldesignale an den genannten Prozessor (4) zu übertragen.

7. System (1), umfassend mindestens eine mobile Vorrichtung (2), eine passive Vorrichtung (3) und einen Prozessor (4), das dazu eingerichtet ist, ein Verfahren nach mindestens einem der vorhergehenden Ansprüche auszuführen.

## Revendications

1. Procédé d'auto-localisation d'un dispositif mobile utilisant au moins un dispositif passif à radiofréquence (3), mis en œuvre dans un système (1) comprenant ledit dispositif mobile (2), ledit dispositif passif (3) et un processeur (4),
- ledit dispositif mobile (2) comprenant au moins
une antenne (20) configurée pour émettre des signaux source de radiofréquence, et
- au moins un capteur (21) relié de manière opérationnelle audit processeur (4) et configuré pour acquérir une ou plusieurs variables d'état relatives audit dispositif mobile (2) se déplaçant le long d'une trajectoire (2a) ;
- ledit dispositif passif (3) étant configuré pour répliquer, au moyen de signaux de retour, lesdits signaux source et pour transmettre audit dispositif mobile (2) lesdits signaux de retour déterminés par la réponse dudit dispositif passif (3) auxdits signaux source,
- ledit processeur (4) étant conçu pour au moins comparer lesdits signaux source et lesdits signaux de retour,
et ledit procédé comprenant :
- le déplacement dudit dispositif mobile (2) le long de ladite trajectoire (2a), l'émission desdits signaux source simultanément au déplacement dudit dispositif mobile à des intervalles de temps prédéterminés le long de ladite trajectoire (2a),
- la réception desdits signaux de retour le long de ladite trajectoire (2a),
- la comparaison desdits signaux de retour et desdits signaux source impliquant au moins la détermination de la variation de phase, mesurée auxdits intervalles de temps prédéterminés le long de ladite trajectoire (2a), entre lesdits signaux source et lesdits signaux de retour, de manière à déterminer, auxdits intervalles de temps prédéterminés, une tendance déterminée de variation de phase sur la base des détections de l'antenne (20) associées à ladite trajectoire (2a) ;
- la construction, à des intervalles de temps prédéterminés, d'une multitude de trajectoires hypothétiques (2b) déduites au moyen de ladite ou desdites variables d'état et d'une multitude desdites tendances hypothétiques de variation de phase sur la base desdites trajectoires hypothétiques (2b) ;
- le stockage, dans une base de données de tendances, de ladite tendance déterminée de variation de phase et desdites tendances hypothétiques de variation de phase,
et étant **caractérisé en ce qu'il** comprend en outre
- la comparaison de ladite tendance déterminée de variation de phase desdits signaux de retour avec la série desdites tendances hypothétiques de variation de phase construites sur la base de ladite série de trajectoires hypothétiques (2b), permettant de déterminer la position du dispositif mobile (2), au moins par rapport au dispositif passif (3) pendant lesdits intervalles de temps prédéterminés, en combinant les résultats de ladite comparaison avec une ou plusieurs desdites variables d'état de manière à déterminer numériquement ladite trajectoire (2a) ;
- dans lequel ledit processeur (4) associe un poids déterministe à chacune desdites trajectoires hypothétiques (2b) en comparant ladite série desdites tendances hypothétiques de variation de phase stockées dans ladite base de données de tendances de variation de phase, construites sur la base de ladite série de trajectoires hypothétiques (2b), avec la tendance de variation de phase déterminée sur la base des détections de ladite antenne (20) ;
- dans lequel ladite série desdites tendances hypothétiques de variation de phase est construite uniquement sur la base de la connaissance de la position dudit dispositif passif (3), sans autre information concernant le type et les caractéristiques de leur émission de rayonnement ;
- dans lequel ledit poids est déterminé en évaluant le degré réel de proximité ou de ressemblance entre la tendance hypothétique de variation de phase et la tendance de variation de phase déterminée sur la base des détections de l'antenne (20) selon une procédure déterministe ; et
- dans lequel lesdites variables d'état comprennent une ou plusieurs grandeurs cinématiques telles que l'accélération ou la vitesse angulaire dudit dispositif mobile (2).

2. Procédé selon la revendication précédente, dans lequel lesdits dispositifs passifs (3) sont des étiquettes RFID.

3. Procédé selon au moins une revendication précédente, dans lequel lesdits signaux source sont des signaux radio UHF ou des micro-ondes.

4. Procédé selon au moins une revendication précédente, comprenant une pluralité desdits dispositifs passifs (3), et dans lequel lesdits signaux source sont communs auxdits dispositifs passifs (3), ladite antenne (20) recevant des signaux de retour provenant de chacun desdits dispositifs passifs (3), et ledit processeur (4) comparant chacun desdits signaux de retour auxdits signaux source communs.

5. Procédé selon au moins une revendication précédente, dans lequel ledit dispositif mobile (2) comprend ledit processeur (4).

6. Procédé selon au moins une des revendications précédentes 1 à 4, ledit processeur (4) étant externe audit dispositif mobile (2), et ledit dispositif mobile (2) comprenant des moyens de connexion (22) configurés pour transmettre au moins lesdits signaux de retour audit processeur (4).

7. Système (1) comprenant au moins un dispositif mobile (2), un dispositif passif (3) et un processeur (4) configuré pour mettre en œuvre un procédé selon au moins une revendication précédente.
